# EUROPEAN PATENT SPECIFICATION

(11) **EP 3 086 921 B1**
(45) Date of publication and mention of the grant of the patent: **31.07.2019**
(21) Application number: 14873782.8
(22) Date of filing: 17.12.2014
(51) Int. Cl.: B29C 64/165, B33Y 70/00, B33Y 10/00, B28B 1/00, B29K 105/16

(54) **METHODS AND SYSTEMS FOR THREE-DIMENSIONAL PRINTING UTILIZING A JETTED-PARTICLE BINDER FLUID**
VERFAHREN UND SYSTEME ZUM DREIDIMENSIONALEN DRUCKEN UNTER VERWENDUNG EINER BINDEMITTELFLÜSSIGKEIT MIT AUSGESTRAHLTEN PARTIKELN
PROCÉDÉS ET SYSTÈMES D'IMPRESSION EN TROIS DIMENSIONS UTILISANT UN FLUIDE LIANT À PARTICULES ÉJECTÉ

(30) Priority: 23.12.2013 US 201361919883 P
(43) Date of publication of application: 02.11.2016
(73) Proprietor: The Exone Company, North Huntingdon, PA 15642 (US)
(72) Inventor: KUHN, Howard, A., Butler, PA 16002 (US); PLYMER, Jason, W., Belle Vernon, PA 15012 (US); LUCAS, Rick, Belmont, OH 43718 (US); BLACKER, Jesse, M., St. Clairsville, OH 43950 (US); BRUNERMER, Daniel, T., Leechburg, PA 15656 (US); LIZZI, Thomas, Harmony, PA 16037 (US)
(74) Representative: Viering, Jentschura & Partner mbB Patent- und Rechtsanwälte
(86) International application number: PCT/US2014/070738
(87) International publication number: WO 2015/100085

(56) References cited:
- EP-A2- 0 431 924
- WO-A1-01/17783
- WO-A1-02/26419
- WO-A1-2009/017648
- US-A- 6 036 777
- US-A1- 2002 079 601
- US-A1- 2004 118 309
- US-A1- 2012 207 929
- US-B2- 7 027 887

## Description

### Background

Field of the Invention: The invention relates to methods for producing articles by three-dimensional printing.

Background of the Invention: Three dimensional printing was developed in the 1990's at the Massachusetts Institute of Technology and is described in several United States patents, including the following United States patents: 5,490,882 to Sachs et al, 5,490,962 to Cima et al, 5,518,680 to Cima et al, 5,660,621 to Bredt et al, 5,775,402 to Sachs et al, 5,807,437 to Sachs et al, 5,814,161 to Sachs et al, 5,851,465 to Bredt, 5,869,170 to Cima et al, 5,940,674 to Sachs et al, 6,036,777 to Sachs et al, 6,070,973 to Sachs et al, 6,109,332 to Sachs et al, 6,112,804 to Sachs et al, 6,139,574 to Vacanti et al, 6,146,567 to Sachs et al, 6,176,874 to Vacanti et al, 6,197,575 to Griffith et al, 6,280,771 to Monkhouse et al, 6,354,361 to Sachs et al, 6,397,722 to Sachs et al, 6,454,811 to Sherwood et al, 6,471,992 to Yoo et al, 6,508,980 to Sachs et al, 6,514,518 to Monkhouse et al, 6,530,958 to Cima et al, 6,596,224 to Sachs et al, 6,629,559 to Sachs et al, 6,945,638 to Teung et al, 7,077,334 to Sachs et al, 7,250,134 to Sachs et al, 7,276,252 to Payumo et al, 7,300,668 to Pryce et al, 7,815,826 to Serdy et al, 7,820,201 to Pryce et al, 7,875,290 to Payumo et al, 7,931,914 to Pryce et al, 8,088,415 to Wang et al, 8,211,226 to Bredt et al, and 8,465,777 to Wang et al. From e.g. WO 02/26419 A1 a method for three-dimensionally printing an article is known, comprising the steps of: forming a layer of a build material powder, selectively printing by jet deposition on the layer a binder fluid and repeating said steps until the article is formed. From e.g. EP 0 431 924 A2 a system for three-dimensionally printing an article from a build material powder is known, comprising: a build platform adapted to receive build powder, a powder layering system adapted to apply successive layers of the build material powder onto the build platform, a binder fluid handling system adapted to selectively print by jet deposition a binder fluid and a control system adapted to control the three-dimensional printing system.

In essence, three-dimensional printing involves the spreading of a layer of particulate material and then selectively jet-printing a fluid onto that layer to cause selected portions of the particulate layer to bind together. This sequence is repeated for additional layers until the desired part has been constructed. The material making up the particulate layer is often referred as the "build material" or the "build material powder" and the jetted fluid is often referred to as a "binder", or in some cases, an "activator". Post-processing of the three- dimensionally printed part is often required in order to strengthen and/or densify the part.

Various methods are used to supply each new powder layer for three- dimensional printing. For example, some three-dimensional printers have a powder reservoir box which contains powder supported upon a vertically indexable platform and use a counter- rotating roller to transfer a predetermined amount of powder from the top of the powder reservoir box to the top of a build box. Some other three-dimensional printers utilize a traveling dispenser to dispense each new layer of powder.

Despite its advantages, conventional three-dimensional printing processes have their drawbacks. One such drawback is that the surface of the resulting article has a contour resolution that is on the order of the particle layer thickness used during the three-dimensional printing process. Typically, the particle layer thickness is in the range of 50 to 500 microns.

Another drawback is that the apparent density of the printed part is essentially the same as the packing density the powder bed that is created during the three-dimensional printing process. Such densities often are in the range of about 50 to 60 % which requires a significant amount of material to be added if infiltration is to be used to densify the article. In cases where densification is to be achieved by sintering or thermomechanical processing, the low print density requires there to be a large amount of shrinkage to densify the article thus increasing the chances of the occurrence of geometrical distortion.

### Summary of the Present Invention

The present invention provides a method for three-dimensionally printing an article according to claim 1 and a system for three-dimensionally printing an article from a build material powder according to claim 5. Further embodiments of the method and the system are described in the respective dependent claims. In one aspect, the present invention provides methods of producing dense three- dimensionally printed articles in manners which overcome the aforementioned disadvantages of the prior art. The methods of the present invention modify the three-dimensional printing process such that the binder fluid that is selectively deposited onto the powder layers contains particulate matter that is smaller than the mean particle size of the build material powder. Preferably, this jet-deposited particulate matter has a mean particle size that is greater than about 1 micron and less than or equal to 50 microns. The jet-deposited particulate matter may be compositionally the same as or different from the build material powder. The jet-deposited material acts to fill in the interparticle interstices of the build material powder thereby simultaneously increasing the density of the printed article and improving its surface roughness and contour resolution, which in turn, improves the surface finish of the final article.

In another aspect, the present invention provides three-dimensional printing systems which have the ability to selectively deposit on the build material powder layers a binder fluid which contains particulate matter that is smaller than the mean particle size of the build material powder.

### Brief Description of the Drawings

The criticality of the features and merits of the present invention will be better understood by reference to the attached drawings. It is to be understood, however, that the drawings are designed for the purpose of illustration only and not as a definition of the limits of the present invention.
FIG. 1 is schematic drawing of a step of selectively jet-depositing a particle-bearing binder fluid upon a layer of build powder in accordance with an embodiment of the present invention.
FIG. 2 is a schematic drawing of a three-dimensional printing system according to an embodiment the present invention.
FIG. 3 is a schematic drawing of a binder handling system according to an embodiment of the present invention.

### Description of Preferred Embodiments

In this section, some preferred embodiments of the present invention are described in detail sufficient for one skilled in the art to practice the present invention without undue experimentation. It is to be understood, however, that the fact that a limited number of preferred embodiments are described herein does not in any way limit the scope of the present invention as set forth in the appended claims. It is to be understood that whenever a range of values is described herein or in the appended claims that the range includes the end points and every point therebetween as if each and every such point had been expressly described. Unless otherwise stated, the word "about" as used herein and in the appended claims is to be construed as meaning the normal measuring and/or fabrication limitations related to the value which the word "about" modifies. Unless expressly stated otherwise, the term "embodiment" is used herein to mean an embodiment of the present invention.

The methods of the present invention comprise three-dimensionally printing articles by selectively jet-depositing a particle-bearing binder fluid upon successive layers of a build material powder such that the particles of the fluid increase the apparent density of the as-printed article. As those skilled in the art will recognize, apparent density refers to the density that a porous article has compared to the density which the article would have if its pores were eliminated. The particulate matter of the fluid is smaller than the mean particle size of the build material powder. Preferably, this jet-deposited particulate matter has a mean particle size that is in the size range of about 1 to 50 microns. The jet-deposited material acts to fill in the interparticle interstices of the build material powder thereby simultaneously increasing the density of the printed article and improving its surface roughness and contour resolution, which in turn, improves the surface finish of the final article.

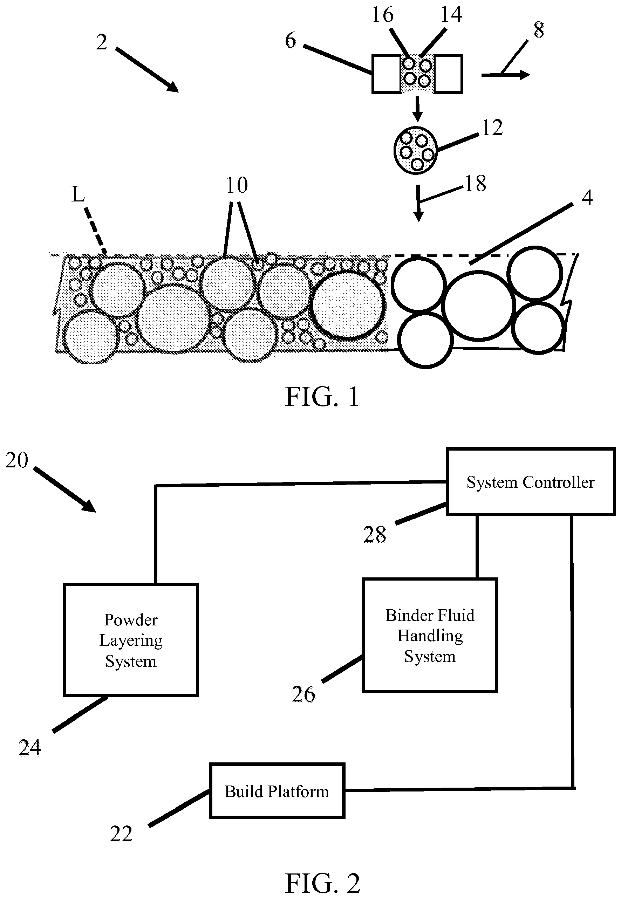

FIG. 1 shows a schematic representation of a portion of a three-dimensional printing system **2** performing a step of a three-dimensional printing method in accordance with the present invention. The system **2** includes a powder layer **4** that is the top layer of a powder bed in which an article is being built and a print nozzle **6** which is moving relative to the powder layer **4** in the direction indicated by arrow **8.** The powder layer **4** comprises particles of the build material powder **10,** which have a mean particle size diameter of D₁. As the nozzle **6** moves along, it jets droplets, e.g. droplet **12,** of a binder fluid **14** containing particulate matter **16** in the direction of arrow **18** so that they impinge the powder layer **4.** As the droplets impinge the powder layer **4,** the binder fluid **14** they contain spreads out into the powder layer **4** (as indicated by the grey shading in the left-hand side of the powder layer **4**) as does the particulate matter **16** they contain. Note that the particulate matter **16** has a mean particle size diameter of D₂ which is smaller than D₁. The presence of the particulate matter **16** helps to smooth the surface of the powder layer **4** as is evident by comparing the left side of the powder layer **4** into which the particulate-bearing binder fluid **14** has been jetted and the right hand side of the powder layer **4** which has not yet received any of the binder fluid **14** with the dotted reference line **L.**

The build material powder may be any desired particulate matter that is compatible with the three-dimensional printing process and the binder fluid that is to be used and the article that is to be built. The build material powder may be a metal, metal alloy, ceramic, form of carbon (e.g. graphite, coke, carbon black, etc.) or polymer, or any combination thereof. The build material powder may comprise particles of one material which are coated with another, e.g. tungsten particles coated with copper or sand particles coated with resin. The build material powder may have any particle size that is compatible with the three-dimensional printing process. Preferably, the build material powder has a mean particle size diameter in the range of about 10 to about 500 microns, and more preferably in the range of about 15 to about 300 microns, and even more preferably in the range of about 20 to about 200 microns. It is to be understood that the actual particle size distribution of a build material powder will include particle sizes both above and below the mean particle size diameter.

The jetted-particulate matter may be any desired particulate matter that is compatible with the binder fluid and being suspended within the binder fluid for serviceable times. The jetted-particulate matter is to be chosen to yield the desired properties in combination with the build material powder material during the processing of the article from the three-dimensional printing stage through any heat treatments and finishing operations. The jetted-particulate matter may be chosen to be compositionally the same as or similar to or different from the build material powder. It may be chosen to alloy with or otherwise react with or interact with (e.g. by creating a stress field) the build material powder material during the processing of the article from the three-dimensional printing stage through any heat treatments and finishing operations. The jetted-particulate matter is chosen to have a particle size distribution that will avoid blockage in any portion of the binder handling system portion of the three-dimensional printer, especially the orifices and passageways in portions of the print heads. Preferably, the mean particle size diameter of the jetted-particulate matter is greater than about 1 micron and no more than about 50 microns, but it may be greater than 50 microns, provided that the binder fluid handling system is adapted to accommodate the particle size without blockages that would make the jetting impractical. In some embodiments, the mean particle size diameter of the jetted-particulate matter may be less than 1 micron, even down to 1 nanometer. More preferably, the mean particle size diameter of the jetted-particulate matter is in the range of about 2 microns to about 20 microns, and even more preferably in the range of about 2 microns to about 10 microns. In some embodiments, it is preferred that the mean particle size diameter of the jetted-particulate matter is less than about 5 microns. It is also desirable to select the mean particle size diameter of the jetted-particulate matter so that it is about one seventh or less than that of the build material powder. It is to be understood that the actual particle size distribution of a jetted-particulate matter will include particle sizes both above and below the mean particle size diameter.

The binder fluid may be any binder fluid that is compatible with the three-dimensional printing system and the build material powder that are being used to make the desired article. The binder fluid is to include a binder, i.e. a component that acts to bind together the build material powder particles by means other than liquid surface tension, e.g. a polymer, and carrier fluid, which is sometimes referred to as a "solvent" whether or not it actually dissolves anything of relevance to the operation. The binder fluid may also include one or more agents which either alone or in concert adjust one or more of the surface tension, evaporation rate, and the viscosity of the binder fluid. The binder fluid preferably also includes an agent which aids in the suspension of the jetted-particulate matter.

To aid the jetted-particulate matter from settling out of the binder fluid, the binder fluid handling system of the three-dimensional printing system may be provided with a means for mixing the jetted-particulate matter and the binder fluid. For example, in-line mixers may be used in one or more of the system's conduits; one or more binder fluid reservoirs may be provided with spinning mixing blades; sub-sonic, sonic, or ultrasonic vibrations may be applied to the mixing fluid; a recirculation system may be included to recirculate the binder fluid at speeds that avoid particulate settling; or any combination of the foregoing may be included.

The loading of binder fluid with the jetted-particulate matter is to be selected based on several factors. These include, the amount of jetted-particulate matter that is desired to be deposited for a predetermined print head traverse speed and droplet size, with higher deposited amounts requiring higher levels of particulate-loading. Another factor is particulate-loading must be controlled so as to stay within the range of viscosities that the print head system is capable of handling. Another factor is that the particulate-loading (along with droplet size) must be controlled so as prevent the momentum transfer that occurs upon the impact of the droplet with the powder layer from causing unwanted disruptions to the powder layer. Another factor is the effect the particulate-loading might have on the evaporation rate of the binder fluid's carrier fluid and this is to be controlled so that the carrier fluid evaporation occurs at a sufficiently high rate so as to permit the three-dimensional printing process to proceed without the deposition of a succeeding powder layer from disrupting its underlying printed layer. Another factor is that the particulate-loading must be not be so high as to cause blockage of the binder fluid handling system by way of accretion or settling out of portions of the jetted-particulate matter. Of high importance is keeping the particulate-loading sufficiently low so as to permit the controlled formation of the desired-sized jetted binder fluid droplets. Preferably, the particulate-loading is such that the volume percent of the jetted-particulate matter of the binder fluid is in the range of about 1 to about 20 %.

The present invention also includes three-dimensional printing systems which are adapted to selectively deposit on build material powder layers a binder fluid which contains particulate matter having a mean particle size diameter that is smaller than the mean particle size diameter of the build material powder. As schematically depicted in FIG. 2, such a system **20** includes a build platform **22** adapted to receive successive layers of a build material powder, a powder layering system **24** adapted to apply successive layers of the build material powder to the build platform **22,** a binder fluid handling system **26** adapted to selectively jet binder fluid onto the successive powder layers, and a control system **28** which is adapted to provide the overall control of the system **20.** The build platforms and powder layering systems described in the prior art may be included into embodiments of the inventive system.

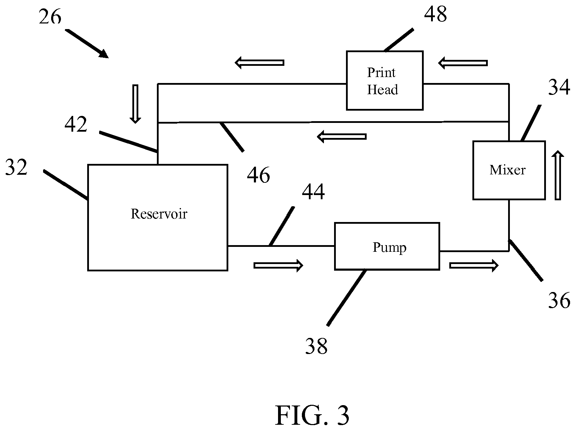

The binder handling systems of the inventive three-dimensional printing systems must be adapted to utilize the particle-laden binder fluids described above without blockages that would make system operation impractical. To accomplish this, the orifice sizes and fluid flow rates through the orifices and fluid conduits of such binder handling systems must be selected to prevent blockage by accretion or settling out of particulates of the jetted-particulate matter. Preferably, the binder handling systems, e.g. binder handling system **26** shown in FIG. 3, include a mechanically-stirred binder fluid reservoir, e.g. mechanically-stirred binder fluid reservoir **32.** It is also preferred to include one or more in-line mixing elements, e.g. in-line mixer **34,** in one or more transfer lines, e.g. transfer line **36** of the binder handling system, these mixers being sized to accommodate the flow rates and particle sizes being used. It is also preferred to use a recirculation system, e.g. recirculation system **38,** comprising a pump, e.g. pump **40,** and transfer lines into and out of the binder fluid reservoir, e.g, transfer lines **42, 44, 46,** to recirculate the binder fluid so as to discourage particulate settling.

It is also preferred that the binder handling system include a print head **48** through which the binder fluid may be recirculated to the binder fluid reservoir. Preferably, such a print head will utilize a design having a common local reservoir for a plurality of printing orifices, such as is described in U.S. Application Publication No. US 2012/0274686 A1 published on November 1, 2012.

The control systems of the prior art may be utilized with the embodiments so long as they are modified to operate the chosen binder handling system.

It is to be understood that all of the components of the binder handling system which come into contact with the binder fluid should be made of wear resistant materials. The selection of the degree of wear resistance for such materials will be affected by the expected types of jetted-particulate matters and binder fluid flow rates that are to utilized during the operation of the binder fluid system as well as the amount of use the binder handling fluid system that is expected. The selection of components with high wear resistance will be beneficial where the jetted-particulate matters are abrasive or the binder fluid flow rates are high or the binder fluid system is expected to be heavily used.

## Claims

1. A method for three-dimensionally printing an article comprising the steps of:
(a) forming a layer **(4)** of a build material powder **(10),** the build material powder **(10)** having a first mean particle size diameter;
(b) selectively printing by jet deposition on the layer **(4)** a binder fluid **(14),** the binder fluid **(14)** comprising a particulate matter **(16)** having a second mean particle size diameter which is one-seventh or less of the first mean particle size diameter and greater than 1 micron; and
(c) repeating steps (a) and (b) until the article is formed.

2. The method of claim 1, wherein the binder fluid **(14)** has a binder loading with the particulate matter **(16)** in the range of between 1 and 20 volume percent.

3. The method of claim 1, wherein the particulate matter **(16)** has a mean particle size diameter which is no greater than 50 microns.

4. The method of claim 1, wherein the particulate matter **(16)** has a mean particle size that is no greater than 20 microns.

5. A system **(20)** for three-dimensionally printing an article from a build material powder **(10),** the system **(20)** comprising:
a build platform **(22)** adapted to receive the build powder **(10)** having a first mean particle size diameter;
a powder layering system **(24)** adapted to apply successive layers **(4)** of the build material powder **(10)** onto the build platform **(22);**
a binder fluid handling system **(26),** comprising:
a mechanically-stirred binder fluid reservoir **(32);**
a binder fluid recirculation system **(38)** to recirculate a binder fluid **(14)** so as to discourage particulate settling, comprising a pump **(40)** and transfer lines **(36, 42, 44, 46)** into and out of the binder fluid reservoir **(32);**
a print head **(40);** and
one or more in-line mixing elements **(34)** in one or more transfer lines;
wherein the binder fluid handling system **(26)** is adapted to selectively print by jet deposition the binder fluid **(14)** including a particulate matter **(16)** having a second mean particle diameter onto the successive layers **(4)** of the build powder **(10);** and
a control system **(28)** adapted to control the three-dimensional printing system **(20);**
wherein the second mean particle size diameter is one seventh or less of the first mean particle size diameter and is greater than 1 micron.

6. The system of claim 5, wherein the in-line mixing element **(34)** is adapted to suspend the particulate matter **(16)** in the binder fluid **(14).**

7. The system of claim 5, wherein the binder fluid recirculation system **(38)** is adapted to recirculate the binder fluid **(14)** through the print head **(48).**

## Patentansprüche

1. Ein Verfahren zum dreidimensionalen Drucken eines Artikels, die Schritte aufweisend:
(a) Formen einer Schicht (4) aus einem Baumaterialpulver (10), wobei das Baumaterialpulver (10) einen ersten mittleren Partikelgrößendurchmesser hat,
(b) selektives Drucken durch Strahlablagern eines Bindemittelfluids (14) auf der Schicht (4), wobei das Bindemittelfluid (14) ein Partikelmaterial (16) aufweist, welches einen zweiten mittleren Partikelgrößendurchmesser hat, der ein Siebtel oder weniger des ersten mittleren Partikelgrößendurchmessers ist und größer als 1 Mikrometer ist, und
(c) Wiederholen der Schritte (a) und (b), bis der Artikel geformt ist.

2. Das Verfahren gemäß Anspruch 1, wobei das Bindemittelfluid (14) eine Bindemittelbeladung mit dem Partikelmaterial (16) in dem Bereich zwischen 1 und 20 Volumenprozent hat.

3. Das Verfahren gemäß Anspruch 1, wobei das Partikelmaterial (16) einen mittleren Partikelgrößendurchmesser hat, der nicht größer als 50 Mikrometer ist.

4. Das Verfahren gemäß Anspruch 1, wobei das Partikelmaterial (16) eine mittlere Partikelgröße hat, die nicht größer als 20 Mikrometer ist.

5. Ein System (20) zum dreidimensionalen Drucken eines Artikels aus einem Baumaterialpulver (10), das System (20) aufweisend:
eine Bauplattform (22), welche eingerichtet ist, um das Baupulver (10) zu empfangen, das einen ersten mittleren Partikelgrößendurchmesser hat,
ein Pulverschichtungssystem (24), welches eingerichtet ist, um sukzessive Schichten (4) des Baumaterialpulvers (10) auf die Bauplattform (22) aufzubringen,
ein Bindemittelfluidhandhabungssystem (26), aufweisend:
ein mechanisch-gerührtes Bindemittelfluidreservoir (32),
ein Bindemittelfluidrezirkulationssystem (38), um ein Bindemittelfluid (14) zu rezirkulieren, um ein Partikelabsetzen zu vermeiden, aufweisend eine Pumpe (40) und Übertragungsleitungen (36, 42, 44, 46) in das Bindemittelfluidreservoir (32) hinein und heraus,
einen Druckkopf (48) und
eines oder mehrere In-der-Leitung-Mischelemente (34) in einer oder mehr Übertragungsleitungen,
wobei das Bindemittelfluidhandhabungssystem (26) eingerichtet ist, um selektiv zu drucken durch Strahlablagern des Bindemittelfluids (14), welches ein Partikelmaterial (16) aufweist, das einen zweiten mittleren Partikeldurchmesser hat, auf die sukzessiven Schichten (4) des Baupulvers (10), und
ein Steuerungssystem (28), welches eingerichtet ist, um das dreidimensionale Drucksystem (20) zu steuern,
wobei der zweite mittlere Partikelgrößendurchmesser ein Siebtel oder weniger des ersten mittleren Partikelgrößendurchmessers ist und größer als 1 Mikrometer ist.

6. Das System gemäß Anspruch 5, wobei das In-der-Leitung-Mischungselement (34) eingerichtet ist, um das Partikelmaterial (16) im Bindemittelfluid (14) zu suspensionieren.

7. Das System gemäß Anspruch 5, wobei das Bindemittelfluidrezirkulationssystem (38) eingerichtet ist, um das Bindemittelfluid (14) durch den Druckkopf (48) zu rezirkulieren.

## Revendications

1. Procédé d'impression en trois dimensions d'un article comprenant les étapes de :
(a) formation d'une couche (4) d'une poudre de matériau de construction (10), la poudre de matériau de construction (10) ayant un premier diamètre de particule moyen ;
(b) impression sélective par dépôt par jet sur la couche (4) d'un fluide liant (14), le fluide liant (14) comprenant une matière particulaire (16) ayant un second diamètre de particule moyen qui représente un septième ou moins du premier diamètre de particule moyen et est supérieur à 1 micron ; et
(c) répétition des étapes (a) et (b) jusqu'à ce que l'article soit formé.

2. Procédé selon la revendication 1, dans lequel le fluide liant (14) a une charge de liant avec la matière particulaire (16) comprise entre 1 et 20 pourcent en volume.

3. Procédé selon la revendication 1, dans lequel la matière particulaire (16) a un diamètre de particule moyen qui n'est pas supérieur à 50 microns.

4. Procédé selon la revendication 1, dans lequel la matière particulaire (16) a une taille de particule moyenne qui n'est pas supérieure à 20 microns.

5. Système (20) d'impression en trois dimensions d'un article à partir d'une poudre de matériau de construction (10), le système (20) comprenant :
une plate-forme de construction (22) adaptée pour recevoir la poudre de construction (10) ayant un premier diamètre de particule moyen ;
un système de disposition de couches de poudre (24) adapté pour appliquer des couches successives (4) de la poudre de matériau de construction (10) sur la plate-forme de construction (22) ;
un système de manipulation de fluide liant (26), comprenant :
un réservoir de fluide liant agité mécaniquement (32) ;
un système de recirculation de fluide liant (38) pour assurer la recirculation d'un fluide liant (14) de sorte à décourager la sédimentation de particules, comprenant une pompe (40) et des conduits de transfert (36, 42, 44, 46) vers l'intérieur et vers l'extérieur du réservoir de fluide liant (32) ;
une tête d'impression (40) ; et
un ou plusieurs éléments de mélange en ligne (34) dans un ou plusieurs conduits de transfert ;
dans lequel le système de manipulation de fluide liant (26) est adapté pour imprimer sélectivement par dépôt par jet le fluide liant (14) comportant une matière particulaire (16) ayant un second diamètre de particule moyen sur les couches (4) successives de la poudre de construction (10) ; et
un système de commande (28) adapté pour commander le système d'impression en trois dimensions (20) ;
dans lequel le second diamètre de particule moyen correspond à un septième ou moins du premier diamètre de particule moyen et est supérieur à 1 micron.

6. Système selon la revendication 5, dans lequel l'élément de mélange en ligne (34) est adapté pour mettre en suspension la matière particulaire (16) dans le fluide liant (14).

7. Système selon la revendication 5, dans lequel le système de recirculation de fluide liant (38) est adapté pour assurer la recirculation du fluide liant (14) à travers la tête d'impression (48).
